# EUROPEAN PATENT APPLICATION

(11) **EP 0 572 087 A1**
(43) Date of publication of application: **01.12.1993**
(21) Application number: 93201497.0
(22) Date of filing: 25.05.1993
(51) Int. Cl.: C08G 67/02

(54) **Process for the preparation of polymers of carbon monoxyde and olefinically unsaturated compounds**

(30) Priority: 27.05.1992 EP 92201537
(71) Applicant: SHELL INTERNATIONALE RESEARCH MAATSCHAPPIJ B.V., NL-2596 HR Den Haag (NL)
(72) Inventor: Keijsper, Johannes Jacobus, NL-1031 CM Amsterdam (NL)

(57) **Abstract**

A process for the preparation of co-polymers which comprises co-polymerizing carbon monoxide with one or more ethylenically unsaturated compounds under polymerization conditions in the gasphase, in the presence of a catalyst system comprising
a) a metal of Group VIII of the Periodic Table,
b) a support, and
c) a promoter,
whereby the amount of promoter is less than 30 mol per gram atom of Group VIII metal.

## Description

The invention relates to a process for the preparation of co-polymers of carbon monoxide with one or more compounds comprising an ethylenically unsaturated bond.

Co-polymers of carbon monoxide and one or more ethylenically unsaturated compounds, in which co-polymers the units originating from carbon monoxide substantially alternate with the units originating from the ethylenically unsaturated compounds, may be prepared by reacting the monomers under polymerization conditions with a suitable catalyst system, usually a catalyst system which comprises a Group VIII metal.

The preparation of these co-polymers may be carried out in the liquid phase, i.e. such that the continuous phase is formed by a liquid diluent, usually a non-polymerizable liquid in which the catalyst dissolves, but the formed co-polymers are substantially insoluble. The recovery and purification of the product normally requires a filtration or centrifugation step. Moreover, a distillation step is usually required in order to recover pure diluent.

The preparation of the co-polymers may also proceed in the gasphase, whereby the continuous phase is formed by gaseous carbon monoxide and possibly one or more of the other monomers, if they are present in the gasphase under the prevailing polymerisation conditions. The gasphase preparation of the co-polymers is considered advantageous, because it allows a more simple product recovery than the liquid phase process. The - at technical scale costly - separation and purification steps inherent in the liquid phase process can be omitted, thus improving the economy of the process.

Both for gasphase and liquid phase embodiments of the process, considerable efforts have been made to increase the activity of the catalyst system, some improvement resulting e.g. by changing the reaction conditions or by modifying the components participating in the catalyst.

According to US 4,831,113, catalytic activity is enhanced by incorporating a quinone in the catalyst system. The preferred amount is indicated as from 1-10000 and in particular from 10-5000 mol per gram atom of palladium. In practice - according to the examples - the process is carried out in the liquid phase, whereby the amount of quinone is 10 or preferably, 100 mol per gram atom of palladium.

More recent work has shown however, that in gasphase operation of the process using a catalyst system which contains a quinone in an amount of 100 mol per gram atom of Group VIII metal, is not very satisfactory. Although, as expected, the activity of the catalyst is increased in comparison with similar experiments whereby no quinone is present in the catalyst system, the activity declines to a level which is not considered acceptable for large scale operation.

Surprisingly it has now been found that by using in the gasphase operation a catalyst system which comprises a small amount of a promoter, the increase in catalytic activity is at least the same as that obtained with the previously practised larger amounts of promoter and in addition the high activity level is maintained over a considerably longer period.

The invention may be defined as relating to a process for the preparation of co-polymers which comprises co-polymerizing carbon monoxide with one or more ethylenically unsaturated compounds in the gasphase, in the presence of a catalyst system comprising
a) a metal of Group VIII of the Periodic Table,
b) a support, and
c) a promoter,
whereby the amount of promoter is less than 30 mol per gram atom of Group VIII metal.

Preferably the amount of promoter in the catalyst system is selected in the range of 1-10 mol per gram atom of Group VIII metal and most preferably it is selected in the range of 2-5 mol.

Suitable promoters include compounds comprising one or more electron withdrawing groups, such as oxo-, sulphonyl-, nitroso- or nitrogroups. Preferably as promoters compounds are used which are predominantly aromatic or comprise a conjugated double bond moiety in their molecules.

Preferred promoters are selected from the group consisting of substituted or non-substituted 1,2-quinones, 1,4-quinones and nitroaromatic compounds. More preferably a 1,4-quinone is used, e.g. 2,3-dimethyl-1,4-benzoquinone, 2,6-dimethyl-1,4-bensoquinone, mono-methyl-1,4-benzoquinone, 2,3,5,6-tetramethyl-1,4-benzoquinone, 2,5-di-tert.butyl-1,4-benzoquinone, 3,5-di-tert.butyl-1,4-bensoquinone, 1,4-naphthoquinone and mono-nitro-1,4-bensoquinone. In particular 1,4-naphtoquinone is preferred.

Suitable nitrites include alkylnitrites such as butylnitrite. Suitable nitrogroup containing promoters include nitroalkanes such as 1-nitropropane and, preferably, nitroaromatic compounds such as 1-nitronaphthalene, 2-nitronaphthalene, 4-isopropyl-nitrobenzene, 3-(trifluoromethyl)-nitrobenzene, 2-nitrotoluene and 1,3-dinitrobenzene.

The metals of Group VIII include the noble metals ruthenium, rhodium, palladium, osmium, iridium and platinum and the iron group metals iron, cobalt and nickel. If desired, mixtures of Group VIII metals may be used. Among the group VIII metals, palladium, rhodium and nickel are preferred, in particular palladium.

For incorporating the Group VIII metal(s) in the catalyst system, usually a metal salt is used, preferably a metal salt of a carboxylic acid, for example acetic acid.

Besides a Group VIII metal, the catalyst system according to the invention preferably comprises an anion of an acid component, in particular an anion of an acid with a pKa of less than 6 provided that the acid is not a hydrohalogenic acid.

Preferably the catalyst system comprises an anion of an acid with a pKa of less than 2.

Examples of suitable acids are sulphuric acid, perchloric acid, sulphonic acids such as methanesulphonic acid, trifluoromethanesulphonic acid, para-toluenesulphonic acid, tetrafluoroboric acid, hexafluorotitanic acid, hexafluorophosphoric acid, hexafluoroantimonic acid and carboxylic acids, such as trifluoroacetic acid and trichloroacetic acid. Also suitable are Lewis acids, such as borium trifluoride, aluminium trifluoride and antimony trifluoride, advantageously in combination with a small amount of a protic compound such as a lower alkanol, for example methanol.

Preference is given to anions of one or more of the acids tetrafluoroboric acid, hexafluorotitanic acid, hexafluorophosphoric acid and hexafluoroantimonic acid.

The amount of the anion component in the catalyst system is preferably 0.5 to 200 and in particular 1-100 mol per gram atom of Group VIII metal.

If desired the anion component may be incorporated simultaneously with the Group VIII metal, e.g. as a complex in which the metal and the acid participate. An example is the complex Pd(CH₃CN)₂(O₃S-C₆H₄-CH₃)₂ which can be prepared by reacting palladium chloride with the silversalt of para-toluene sulphonic acid in acetonitrile as solvent.

Preferably the catalyst system of the invention comprises, besides a Group VIII metal, a support, a promoter and optionally an acid component, one or more ligands capable of complexing with the Group VIII metal.

Suitable ligands include monodentate, bidentate and polydentate ligands.

Bidentate ligands complexing with the Group VIII metal via two atoms of the ligand, selected from phosphorus, arsenic, antimony, sulphur and nitrogen atoms, are preferred.

Examples of suitable bidentates are nitrogen bidentates, sulphur bidentates and phosphorus bidentates.

Preferred nitrogen bidentates are compounds of the general formula 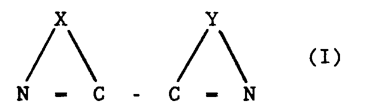
wherein X and Y represent organic bridging groups containing three or four bridging atoms, two of which are carbon atoms, such as 2,2'-bipyridine and 1,10-phenanthroline.

Preferred sulphur bidentates are compounds of the general formula R¹-S-R-S-R² wherein R represents a bivalent organic bridging group containing at least two carbon atoms in the bridge and each of R¹ and R² independently represents an optionally substituted hydrocarbyl group, such as 1,2-bis(ethylthio)ethane and cis-1,2-bis(benzylthio)ethene.

In particular preferred are phosphorus bidentates of the general formula

R¹R²P-R-PR³R⁴ (II)

wherein R has the aforesaid meaning and each of R¹, R², R³ and R⁴ independently represents a substituted or non-substituted hydrocarbyl group.

R¹, R², R³ and R⁴ may represent the same or different, optionally substituted, aliphatic, cycloaliphatic or aromatic groups. Preference is given to aromatic groups substituted by one or more polar groups. In particular preferred are compounds of formula (II) wherein each of R¹, R², R³ and R⁴ represents a phenylgroup comprising an alkoxy group at one or both ortho-positions with respect to the phosphorus atom to which the phenyl group is linked.

Examples of suitable phosphorus containing bidentate ligands are 1,2-bis(diphenylphosphino)ethane, 1,3-bis[bis(2-methoxyphenyl)-phosphino]propane and 1,3-bis[bis(2,6-dimethoxyphenyl)phosphino]-propane.

The amount of bidentate ligand in the catalyst system is advantageously in the range of 0.5 to 100, preferably in the range of 1 to 50 mol per gram atom of Group VIII metal. If the catalyst system comprises a phosphorus bidentate ligand of formula (II), the amount is preferably in the range of 0.75 to 1.5 mol per gram atom of Group VIII metal.

The support participating in the catalyst systems of the invention may be inorganic such as silica, alumina, talc or charcoal, or organic such as cellulose, dextrose or dextran gel. Preference is given to a support which is substantially a porous carrier material, in particular a carrier material having a pore volume of at least 0.01 cm³ per gram, as determined by mercury porosimetry.

Very suitable supports are polymeric materials such as polyethylene, polypropylene, polyoxymethylene and polystyrene. If desired mixed materials may be used such as polymer impregnated silicas.

A preferred carrier material is a co-polymer which as regards structure and composition is substantially the same as the co-polymer to be prepared in the process of the invention.

The preparation of the catalyst system may conveniently be carried out in a separate step preceding the process of the invention, e.g. by impregnating the carrier material with a solution or suspension of the catalyst components or precursors thereof. In this manner the various catalyst components may be added to the carrier material together or separately.

The promoter may likewise be incorporated in the catalyst system beforehand or may be added to the reactor under polymerisation conditions, thus forming the catalyst system of the invention in situ.

Ethylenically unsaturated compounds suitable to be used as starting material in the co-polymerization process of the invention include compounds consisting exclusively of carbon and hydrogen and compounds which in addition comprise one or more hetero-atoms, such as unsaturated esters.

Unsaturated hydrocarbons are preferred ethylenically unsaturated compounds. Suitable examples are lower olefins such as ethene, propene and 1-butene, cyclic compounds such as cyclopentene and aromatic compounds such as styrene and alpha-methylstyrene. Preference is given to the use of ethene, propene or a mixture of ethene and propene.

The molar ratio between the monomers, viz. carbon monoxide and the ethylenically unsaturated compound(s), is generally selected in the range of 5:1 to 1:5. Preferably the said molar ratio is selected in the range of 2:1 to 1:2, for example the monomers are used in substantially equimolar amounts.

The gasphase polymerisation is preferably carried out with addition of a small quantity of a volatile protic liquid, such as a lower aliphatic alcohol, and/or hydrogen. The quantity of this liquid is chosen so small that under the polymerization conditions the liquid is substantially in the gasphase. A suitable quantity may be 40-60% by weight, relative to the quantity which is sufficient to saturate the gas cap under the conditions of the polymerization.

The preparation of the co-polymers is preferably carried out at a temperature in the range of 20-200 °C, although the use of a reaction temperature outside that range is not precluded. Preferably the reaction temperature is selected in the range of 25-150 °C.

Suitable pressures generally are within the range of 1-200 bar, but preferably the pressure is in the range of 2-150 bar.

The co-polymers obtained according to the invention can be processed into shaped articles, films, sheets, fibres and the like. They exhibit good mechanical properties and are hence suitable for a variety of commercially interesting applications, e.g. in the car industry, for the manufacturing of packaging materials for food and drinks and various applications in the domestic sphere.

The invention will further be illustrated by the following examples.

### Example 1

A carbon monoxide/ethene co-polymer was prepared as follows:

### a) preparation of the catalyst system:

5 gram of a linear alternating carbon monoxide/ethene co-polymer was impregnated with a solution containing
0.0047 mmol palladiumacetate
0.024 mmol 1,4-naphthoquinone
0.005 mmol 1,3-bis[bis(2-methoxyphenyl)phosphino]propane
0.012 mmol tetrafluoroboric acid.5 aq.
0.2 ml tetrahydrofurane
2 ml methanol

### b) preparation of the co-polymer:

The catalyst composition obtained according to a) was introduced into a 300-ml autoclave provided with a stirrer. Air present in the autoclave was expelled therefrom by pressurizing with nitrogen and releasing the pressure which procedure was repeated two more times. Subsequently a 1:1 molar mixture of carbon monoxide and ethene was introduced under pressure and at the same time the contents were heated until a temperature of 85 °c and a pressure of 50 bar were reached. During the polymerization the pressure was maintained by further introducing a 1:1 molar carbon monoxide/ethene mixture. It was established by analysis that by these procedures a large proportion of the methanol used as solvent for the catalyst system had been removed. A reproducible quantity of 0.5 ml methanol remained behind in the polymerisation mixture. After 1 hour the polymerization rate was 16.1 kg of co-polymer per g of palladium and per hour (kg/(g Pd.h)). After 4 hours the polymerisation rate had not changed. The polymerisation was terminated after 8 hours by cooling to room-temperature and releasing the pressure. The yield was 50.2 gram corresponding to an average polymerization rate of 11.3 kg/(g Pd.h).

### Example 2

A carbon monoxide/ethene co-polymer was prepared substantially as described in Example 1, except that a catalyst composition was used which, instead of naphthoquinone, contained 0.022 mmol 1,4-benzoquinone.

The polymerisation rate after 1 hour was 19.8 kg/(g Pd.h). After 4 hours the rate was still 17.1 kg/(g Pd.h).

The polymerisation was terminated after 8 hours. The yield was 65.4 g, corresponding with an average polymerisation rate of 15.1 kg/(g Pd.h).

### Example 3

A carbon monoxide/ethene co-polymer was prepared, substantially as described in Example 1, except that a catalyst composition was used which, instead of naphthoquinone, contained 0.018 mmol tetramethyl-1,4-benzoquinone.

The polymerisation rate after 1 hour was 17.7 kg/(g Pd.h). After 4 hours the rate was still 16.6 kg/(g Pd.h).

The polymerisation was terminated after 7 hours. The yield was 57.2 g, corresponding with an average polymerisation rate of 14.9 kg/(g Pd.h).

### Example 4

A carbon monoxide/ethene co-polymer was prepared substantially as described in Example 1, except that a catalyst composition was used which, instead of naphthoquinone, contained 0.023 mmol 2,5-di-tert.butyl-1,4-benzoquinone.

The polymerization rate after 1 hour was 15.6 kg/(g Pd.h). After 4 hours the rate was still 13.0 kg/(g Pd.h).

The polymerization was terminated after 7 hours. The yield was 52.3 g, corresponding with an average polymerisation rate of 13.5 kg/(g Pd.h).

### Example A (for comparison only)

A carbon monoxide/ethene co-polymer was prepared substantially as described in Example 1, except that a catalyst composition was used which did not contain naphthoquinone.

The polymerization rate after 1 hour was 16.0 kg/(g Pd.h); after 4 hours the rate had decreased to 11.1 kg/(g Pd.h).

The polymerization was terminated after 21 hours. The yield was 62.8 g, corresponding with an average polymerisation rate of only 5.5 kg/(g Pd.h).

### Example 5

A carbon monoxide/ethene co-polymer was prepared substantially as described in Example 1, except that a catalyst composition was used which, instead of naphthoquinone, contained 0.024 mmol nitrobenzene.

The polymerization rate after 1 hour was 19.0 kg/(g Pd.h). After 4 hours the rate was still 15.1 kg/(g Pd.h).

The polymerization was terminated after 8 hours. The yield was 63.8 g, corresponding with an average polymerization rate of 14.7 kg/(g Pd.h).

### Example B (for comparison only)

A carbon monoxide/ethene co-polymer was prepared substantially as described in Example 5, except that a catalyst composition was used which contained 0.5 mmol nitrobenzene, instead of 0.024 mmol.

The polymerisation rate after 1 hour was 5.1 kg/(g Pd.h). After 4 hours the rate had dropped to 3.0 kg/(g Pd.h).

The polymerization was terminated after 22 hours. The yield was 38.0 g, corresponding to an average polymerisation rate of 3.0 kg/(g Pd.h).

### Example 6

A carbon monoxide/ethene co-polymer was prepared, substantially as described in Example 1, except for the following differences:
a) A different linear alternating carbon monoxide/ethene co-polymer was impregnated with a solution of catalyst components.
b) A catalyst composition was used which contained 0.1 mmol 1,4-naphthoquinone instead of 0.024 mmol.

The polymerization rate after 1 hour was 15.8 kg/(g Pd.h). After 4 hours the rate was still 12.5 kg/(g Pd.h).

The polymerization was terminated after 12 hours. The yield was 60.2 g, corresponding to an average polymerisation rate of 9.2 kg/(g Pd.h).

### Example 7

A carbon monoxide/ethene co-polymer was prepared substantially as described in Example 6, except that a catalyst composition was used which contained 0.01 mmol 1,4-naphthoquinone instead of 0.1 mmol.

The polymerisation rate after 1 hour was 15.1 kg/(g Pd.h). After 4 hours the rate was still 11.6 kg/(g Pd.h).

The polymerization was terminated after 12 hours. The yield was 58.4 g, corresponding to an average polymerization rate of 8.9 kg/(g Pd.h).

### Example C (for comparison only)

A carbon monoxide/ethene co-polymer was prepared substantially as described in Example 6, except that a catalyst composition was used which did not contain naphthoquinone.

The polymerization rate after 1 hour was 12.5 kg/(g Pd.h). After 4 hours the rate had dropped to 10.1 kg/(g Pd.h).

The polymerisation was terminated after 12 hours. The yield was 38.5 g, corresponding to an average polymerization rate of 5.6 kg/(g Pd.h).

### Example 8

A carbon monoxide/ethene co-polymer was prepared substantially as described in Example 1, except for the following differences:
a) Instead of a linear alternating carbon monoxide/ethene co-polymer, 5 g of polypropylene was impregnated with a solution of catalyst components.
b) A catalyst composition was used which contained 0.012 mmol naphthoquinone instead of 0.024 mmol.

The polymerization rate after 1 hour was 12.4 kg/(g Pd.h). After 4 hours the rate was still 10.7 kg/(g Pd.h).

The polymerization was terminated after 8 hours. The yield was 47.4 g, corresponding to an average polymerisation rate of 10.6 kg/(g Pd.h).

### Example D (for comparison only)

A carbon monoxide/ethene co-polymer was prepared substantially as described in Example 8, except that a catalyst composition was used which did not contain naphthoquinone.

The polymerisation rate after 1 hour was 10.6 kg/(g Pd.h). After 4 hours the rate had decreased to 8.5 kg/(g Pd.h).

The polymerization was terminated after 4 hours. The yield was 25.2 g, corresponding to an average polymerisation rate of 10.1 kg/(g Pd.h).

From the above Examples 1-8 and comparative examples A-D it can be seen that the presence of a small amount of promoter in the catalyst composition has a favourable effect on the activity and the stability of the catalyst system.

By using a large amount of promoter (100 mol promoter per gram atom of palladium (comparative example B)) a lower catalytic activity was observed.

The use of a catalyst composition which did not contain a promoter resulted in a rapid decline of catalytic activity.

With the aid of C¹³NMR analysis it was established that the carbon monoxide/ethene co-polymers prepared according to the examples 1-8, as well as those obtained in the comparative examples A-D had linear chains in which the units originating from carbon monoxide were alternating with the units originating from ethene.

## Claims

1. A process for the preparation of co-polymers which comprises co-polymerising carbon monoxide with one or more ethylenically unsaturated compounds in the gasphase, in the presence of a catalyst system comprising
a) a metal of Group VIII of the Periodic Table,
b) a support, and
c) a promoter,
whereby the amount of promoter is less than 30 mol per gram atom of Group VIII metal.

2. A process as claimed in claim 1, characterized in that a catalyst system is used which comprises palladium as Group VIII metal, and comprises in addition an anion of an acid with a pKa of less than 6, provided that the acid is not a hydrohalogenic acid, and a bidentate ligand complexing with the Group VIII metal via two atoms of the ligand, selected from phosphorus, arsenic, antimony, sulphur and nitrogen atoms.

3. A process as claimed in claim 2, characterized in that the catalyst system comprises an anion of an acid selected from the group consisting of tetrafluoroboric acid, hexafluorotitanic acid, hexafluorophosphoric acid and hexafluoroantimonic acid.

4. A process as claimed in claim 2 or 3, characterized in that the catalyst system comprises a ligand of the general formula R¹R²P-R-PR³R⁴ (formula (II)) wherein each of R¹, R², R³ and R⁴ independently represents a substituted or non-substituted hydrocarbylgroup and R represents a bivalent organic bridging group containing at least two carbon atoms in the bridge.

5. A process as claimed in claim 4, characterized in that in the ligand of formula (II) each of R¹, R², R³ and R⁴ represents a phenyl group comprising an alkoxy group in one or both ortho-positions with respect to the phosphorus atom to which the phenyl group is linked.

6. A process as claimed in any of claims 1-5, characterized in that a catalyst system is used whereby the support is substantially a porous carrier material which is a co-polymer which as regards structure and composition is substantially the same as the co-polymers to be prepared.

7. A process as claimed in any of claims 1-6, characterized in that a catalyst system is used comprising a promoter selected from the group consisting of substituted or non substituted 1,2-quinones, 1,4-quinones and nitroaromatic compounds.

8. A process as claimed in any of claims 1-7, characterized in that the amount of promoter is selected in the range of 1-10 mol per gram atom of Group VIII metal.

9. A process as claimed in claim 8, characterized in that the amount of promoter is selected in the range of 2-5 mol per gram atom of Group VIII metal.

10. A process as claimed in any of claims 1-9, characterized in that as ethylenically unsaturated compound ethene or a mixture of ethene and propene is used, and in that the reaction is carried out at a temperature in the range of 25-150 °C, at a pressure in the range of 2-150 bar and using a molar ratio between the ethylenically unsaturated compound(s) and carbon monoxide in the range of 5:1 to 1:5.
